# EUROPÄISCHE PATENTSCHRIFT

(11) **EP 2 706 225 B1**
(45) Veröffentlichungstag und Bekanntmachung des Hinweises auf die Patenterteilung: **12.08.2015**
(21) Anmeldenummer: 13002849.1
(22) Anmeldetag: 03.06.2013
(51) Int. Cl.: F03B 7/00, F03B 15/14, F03B 11/08

(54) **Wasserradanordnung und Verfahren zum Nachrüsten eines Wasserkanals mit einem Wasserrad**
Water wheel assembly and method for retrofitting a water channel with a water wheel
Agencement de roue hydraulique et procédé de rééquipement d'un canal d'eau avec une roue hydraulique

(43) Veröffentlichungstag der Anmeldung: 12.03.2014
(73) Patentinhaber: Kraus, Karl, 79777 Ühlingen-Birkendorf (DE); Kraus, Oliver, 79777 Ühlingen-Birkendorf (DE)
(72) Erfinder: Kraus, Karl, 79777 Ühlingen-Birkendorf (DE); Kraus, Oliver, 79777 Ühlingen-Birkendorf (DE)
(74) Vertreter: Hössle Patentanwälte Partnerschaft

(56) Entgegenhaltungen:
- EP-A1- 1 975 404
- WO-A2-2011/106806
- CH-A1- 705 302
- FR-A1- 2 943 390
- US-B1- 7 503 744

## Beschreibung

Die vorliegende Erfindung betrifft eine Wasserradanordnung. Insbesondere betrifft die vorliegende Erfindung eine Wasserradanordnung zur Gewinnung von Restenergie aus einem Wasserkanal mit geringem Gefälle, wie bspw. einem Abwasserkanal einer Kläranlage. Des weiteren betrifft die Erfindung ein Verfahren zum Nachrüsten eines Wasserkanals mit einem Wasserrad.

Aus der DE 38 03 147 A1 ist eine Anordnung mit einem Wasserrad bekannt, das zum Zwecke der Stromgewinnung mit durch die Kläranlage hindurchfließendem Abwasser angetrieben wird.

Aus der DE 43 25 402 A1 ist ein Wasserkraft-Antriebsaggregat bekannt, dessen mit Schaufeln versehenes Antriebselement zur Energiegewinnung einen walzenförmigen Grundkörper aufweist, der auf einer geschlossenen zylindrischen Außenfläche mit radial nach außen abstehenden Schaufeln versehen ist. Das Antriebselement ist drehbar in einem dazu konzentrischen, feststehenden, trommelförmigen Gehäuse angeordnet, dessen Innendurchmesser im wesentlichen gleich dem Durchmesser eines Kreises ist, längs welchem sich die äußeren Enden der Schaufeln bei der Drehung des Antriebselementes bewegen. Das Gehäuse ist stromaufwärts in seinem oberen Teil mit einer Einlassöffnung und stromabwärts in seinem unteren Teil mit einer Auslassöffnung versehen.

Die US 7,503,744 B1 offenbart ein Wasserrad mit einem dem Wasserrad stromaufwärts um dessen Drehachse drehbar gelagert zugeordneten Radialstauschild, das sich zur Steuerung einer unterhalb des Wasserrads befindlichen Öffnung wasserstandsabhängig vor das Wasserrad dreht.

Demgegenüber werden erfindungsgemäß eine Wasserradanordnung mit den Merkmalen des Anspruchs 1 sowie ein Verfahren zum Nachrüsten eines Wasserkanals mit einem Wasserrad mit den Merkmalen des Anspruchs 8 vorgeschlagen.

Erfindungsgemäß wird zur Nutzung von Restenergie aus einem Wasserkanal mit geringem Gefälle ein unterschlächtiges Wasserrad mit stromaufwärts zugeordnetem Radialstauschild vorgeschlagen, das sich der Wasserhöhe anpassend ausgebildet ist.

Das Radialstauschild ist um eine Drehachse des Wasserrads drehbar angeordnet. Es bewegt sich radial mit steigender Wasserhöhe in Einflussrichtung (stromaufwärts) vor dem Wasserrad nach unten, um die Einstromhöhe des Wassers in das Wasserrad anzupassen. Bei einem niedrigen Wasserstand wird dadurch Wasser direkt vor dem Wasserrad aufgestaut und die Einstromhöhe erhöht, während bei höherem Wasserstand eine Absenkung des Radialstauschilds erfolgt, wodurch Wasser zunehmend ungehemmt in das Wasserrad einströmen kann. Diese erfindungsgemäße Maßnahme hat einen deutlich verbesserten Nutzungsgrad zur Stromgewinnung aus einem Wasserkanal mit geringem Gefälle zur Folge.

Eine Drehung des Radialstauschilds erfolgt somit abhängig von einer Höhe des Wassers in dem Wasserkanal vor dem Wasserrad. Bei dieser Drehung deckt das Radialstauschild eine Einströmseite des Wasserrads zumindest teilweise ab. Auf diese Weise wird in Anpassung an den Wasserstand eine sich verändernde Stauhöhe vor dem Wasserrad erzeugt.

Die Drehung des Radialstauschilds kann automatisch mechanisch oder elektrisch oder auch hydraulisch erfolgen. Dies kann bspw. mittels einer Schwimmeranordnung erfolgen. Alternativ kann dies mittels einer sensorgesteuerten Elektro- bzw. Servomotoranordnung erfolgen.

Die Wasserradanordnung kann eine unterhalb des Wasserrads vorgesehen bewegliche Klappe aufweisen, die dazu ausgebildet ist, eine Durchflussöffnung freizugeben. Dies ermöglicht es, Spülstöße zur Vermeidung von Ablagerungen am Kanalboden stromabwärts des Wasserrads zu erzeugen.

Das Wasserrad kann in einem Rahmen drehbar gelagert angeordnet sein. Die erleichtert die Vormontage der erfindungsgemäßen Wasserradanordnung, wodurch eine einfachere Nachrüstung bestehender Wasser- bzw. Abwasserkanäle möglich ist.

Gegenstand der Erfindung sind entsprechend auch ein Wasserkanal mit einer beschriebenen Wasserradanordnung sowie ein Verfahren zum Nachrüsten eines Wasserkanals mit den Merkmalen der Ansprüche 7 und 8.

Im Gegensatz zu aus dem Stand der Technik bekannten Systemen stellt die Erfindung ein unterschlächtiges Wasserrad mit einer Zuflussregelung bereit, die eine Optimierung des Verhältnisses aus maximal höchstem Stauziel und dem Nutzungsgrad aufgrund einer deutlich verbesserten Anpassung an sich ständig ändernde Wassermengen in einem Kanal mit geringem Gefälle ermöglicht. Darüber hinaus eignet sich die Wasserradanordnung der Erfindung zur Nachrüstung bestehender Kanäle, da keine (wesentlichen) Umbaumaßnahmen vorgenommen werden müssen. Mit der erfindungsgemäßen Regelung wird ein System mit hoher Leistungskonstanz bereitgestellt.

Weitere Vorteile und Ausgestaltungen der Erfindung ergeben sich aus der Beschreibung und der beiliegenden Zeichnung. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Figur 1 zeigt in perspektivischer Darstellung eine erfindungsgemäße Wasserradanordnung mit einem Radialstauschild in einer Stellung bei niedrigem Wasserstand.

Figur 2 zeigt die Wasserradanordnung der Figur 1 mit dem Radialstauschild in einer Stellung bei hohem Wasserstand.

Figur 3 zeigt eine perspektivische Darstellung einer erfindungsgemäßen Wasserradanordnung mit einer stark schematisch dargestellten Schwimmeranordnung zur automatischen Verstellung des Radialstauschilds.

Figur 4 zeigt eine perspektivische Darstellung einer erfindungsgemäßen Wasserradanordnung mit einem an dem Radialstauschild angebrachten angedeuteten Gestänge zur Übertragung einer elektromotorischen Verstellung des Radialstauschilds.

Die Figuren zeigen die Erfindung anhand von stark schematisch und nicht maßstabsgetreu wiedergegebenen Ausführungsbeispielen.

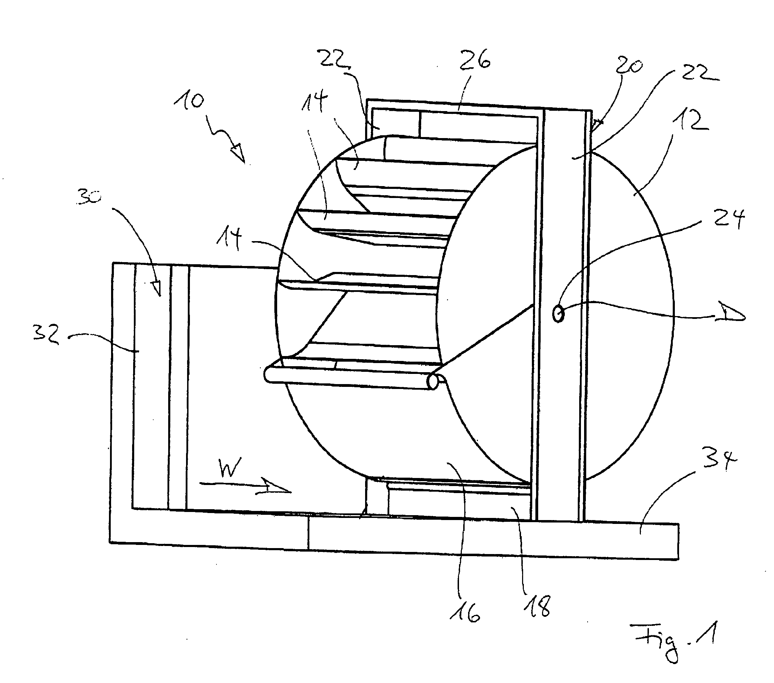

Figur 1 zeigt in perspektivischer Darstellung eine erfindungsgemäße Wasserradanordnung 10. Die Wasserradanordnung 10 umfasst ein Wasserrad 12 mit einer Vielzahl von Radschaufeln 14, die derart angeordnet sind, dass sie für einströmendes Wasser eine Widerstandsfläche darstellen, woraus eine Drehung des Wasserrads 12 um eine Drehachse D resultiert, die zur Energiegewinnung genutzt werden kann.

Die Wasserradanordnung 10 ist in einem nur abschnittsweise schematisch dargestellten Wasserkanal 30 angeordnet. Der Wasserkanal 30 umfasst Kanalwände 32 (von denen nur eine in der Darstellung der Figur zu sehen ist) und einen Kanalboden 34. Die Wasserradanordnung 10 umfasst einen Rahmen 20, mittels welchem sie in den Wasserkanal 30 eingesetzt ist, wie nachfolgend noch ausführlicher zu beschreiben ist. Die Fließrichtung des Wassers in dem Wasserkanal 30, der nur ein geringes Gefälle aufweist, ist mit einem Pfeil W dargestellt. Bei der erfindungsgemäßen Wasserradanordnung handelt es sich um eine sogenannte unterschlächtige Wasserradanordnung.

Die Wasserradanordnung 10 umfasst des weiteren ein Radialstauschild 16, das um die Drehachse D des Wasserrads 12 drehbar angeordnet ist. Das Radialstauschild 16 ist stromaufwärts zu dem Wasserrad 12, d.h. an der Einlaufseite des Wasserrads 12, angeordnet. Die Anordnung des Radialstauschilds 16 ist derart, dass es sich wasserstandsabhängig vor das Wasserrad dreht. Dies bedeutet, dass eine Drehung des Radialstauschilds 16 in Abhängigkeit von einer Änderung des Wasserstands in dem Wasserkanal 30 erfolgt. Je nach Drehstellung staut das Radialstauschild somit mehr oder weniger (bzw. gar kein) Wasser vor dem Eintritt in das Wasserrad auf.

Wie aus den Darstellungen der Figuren ersichtlich, weist das Radialstauschild 16 einen im wesentlichen kreissegmentförmigen Querschnitt auf, der den Abmessungen, d.h. dem Radius, des Wasserrads entsprechend gewählt ist, so dass der Abstand zwischen Radialstauschild und Wasserrad auf das konstruktiv mögliche Minimum reduziert werden kann. Das Radialstauschild ist somit erfindungsgemäß an die Form und Größe des Wasserrads angepasst. Erfindungsgemäß werden so die Leckverluste, die den Wirkungsgrad negativ beeinflussen, minimiert. Zudem ermöglicht das Radialstauschild der Erfindung eine stufenlose Regelung des Wasserstands vor dem unterschlächtigen Wasserrad.

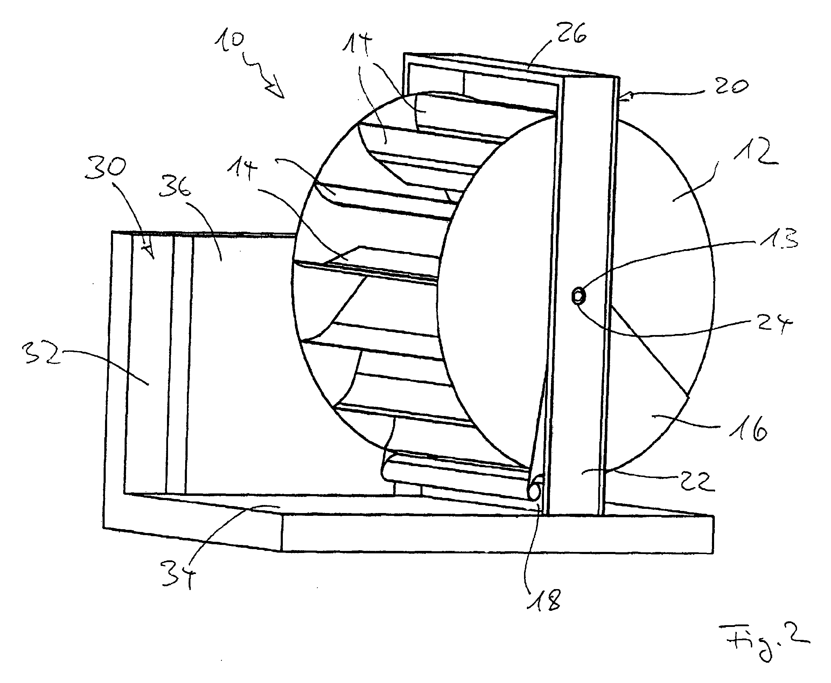

Erfindungsgemäß ist die Drehung des Radialstauschilds 16 zur Erhöhung des Nutzungsgrades einer Stromgewinnung aus der Kraft des in dem Wasserkanal 30 fließenden Wassers derart, dass sich das Radialstauschild 16 entgegengesetzt zu der Richtung der Wasserstandsänderung dreht. Oder mit anderen Worten: im Falle eines zunehmenden Wasserstandes dreht sich das Radialstauschild 16 nach unten, und im Falle eines abnehmenden Wasserstandes dreht sich das Radialstauschild 16 nach oben. Die Einstellung der Drehung des Radialstauschilds 16 kann derart erfolgen, dass ab einer vorbestimmten oberen Wasserstandshöhe das Radialstauschild vollständig geöffnet ist, sich also in einer unteren Anschlagstellung befindet (vgl. Figur 2), und ab einer vorbestimmten unteren Wasserstandshöhe in einer oberen Anschlagstellung befindet. Die Höhe der oberen Anschlagstellung ist von dem Winkel, den das Radialstauschild abdeckt, abhängig. In dem dargestellten Ausführungsbeispiel ist diese obere Anschlagstellung in Figur 1 zu sehen; es ist jedoch möglich und denkbar, dass diese - je nach Ausgestaltung des Kanals und zu erwartendem Wasserfluss/Volumenstrom - auch höher liegt.

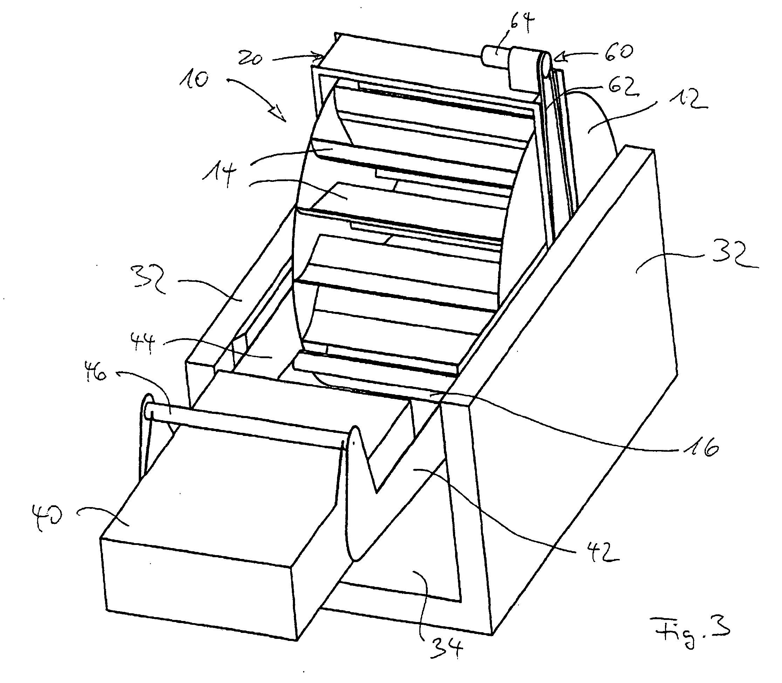

Die Steuerung des Radialstauschilds 16 kann automatisch erfolgen, bspw. mechanisch oder elektrisch. Dem Fachmann erschließen sich die Möglichkeiten einer derartigen Steuerung, die grundsätzlich auch hydraulisch bzw. pneumatisch erfolgen kann, im Rahmen seines fachmännischen Könnens. Lediglich zu Zwecken der Anschauung ist in Figur 3 eine Verwendung eines mit dem Radialstauschild 16 über ein Gestänge 42, 44, 46 gekoppelten Schwimmers 40 dargestellt. Der Schwimmer 40 ist stromaufwärts vor dem Radialstauschild 16 und dem Wasserrad 12 angeordnet. Er steigt mit zunehmendem Wasserstand nach oben. Seine Steigbewegung wird über das Gestänge 42, 44, 46 gegenläufig auf das Radialstauschild 16 übertragen, das bei steigendem Schwimmer nach unten und bei sinkendem Schwimmer nach oben gedreht wird.

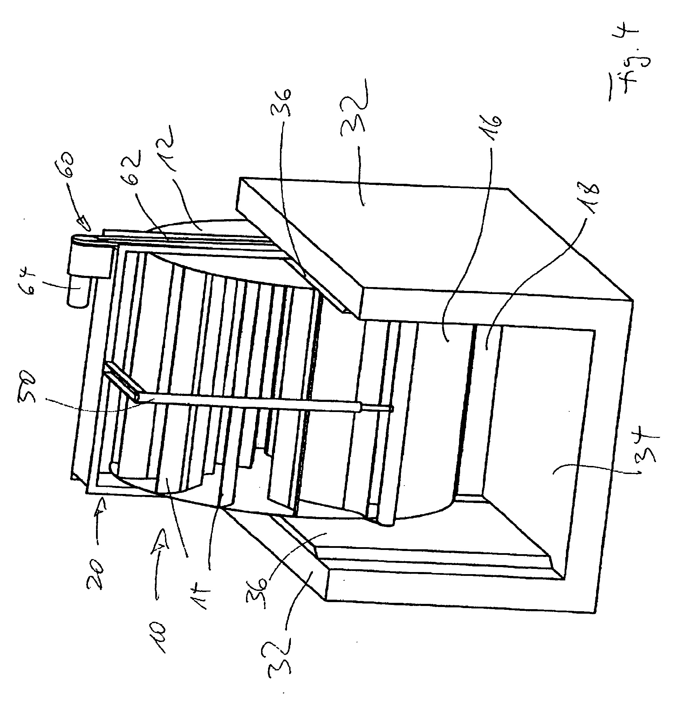

Ebenfalls zu Zwecken der Anschauung ist in Figur 4 als alternative (oder auch zur Erzeugung einer Redundanz kumulativ denkbaren) Ausgestaltung eine Anordnung mit einem mit dem Radialstauschild 16 verbundenen angedeuteten Hubgestänge 50 dargestellt, das in nicht näher dargestellter und dem Fachmann an sich bekannter Art und Weise elektrisch oder hydraulisch angetrieben wird.

In den Figuren 3 und 4 ist darüber hinaus eine Vorrichtung 60 zur Übertragung der Wasserraddrehung dargestellt, mittels welcher die Drehung des Wasserrads 12 um die Drehachse D auf einen (nicht dargestellten) Generator übertragen wird. Diese Vorrichtung 60 zur Übertragung der Wasserraddrehung umfasst bspw. einen geeigneten Ketten- oder Riementrieb mit einer Kette bzw. einem Riemen 62, mit dem die Drehung einer Mittelwelle 13 des Wasserrads 12 (vgl. Figur 2) auf eine dem (nicht dargestellten) Generator zugeordnete Welle 64 übertragen wird.

Wie in den Ausführungsbeispielen der Figuren 3 und 4 dargestellt, kann die Vorrichtung 60 an dem Rahmen 20 der Wasserradanordnung angebracht sein, wodurch sich die zu noch zu beschreibende Montage und insbesondere Nachrüstung bestehender Wasserkanäle stark vereinfacht.

Unterhalb des Wasserrads 12 befindet sich eine bewegliche Klappe 18. Die Klappe 18 befindet sich im Normalbetrieb in einer geschlossenen Stellung, bei der es sich um eine im wesentlichen senkrechte Stellung handeln kann. Im Falle eines Spülbetriebs kann diese Klappe bspw. durch Drehung oder Verschiebung nach oben geöffnet werden, so dass sie Durchflussöffnung unterhalb des Wasserrads 12 freigibt. Dadurch kann ein Spülstoß (Wasserschwall) erzeugt werden, um am Boden des Kanals befindliche Ablagerungen direkt unter und hinter dem Wasserrad zu beseitigen, um einer möglichen Funktionsstörung des Betriebs des Wasserrads vorzubeugen. Zudem kann diese Klappe 18 auch dazu genutzt werden, bei Stillstand des Wasserrads den Hauptvolumenstrom durch die Durchflussöffnung zu leiten.

Der Rahmen 20 der erfindungsgemäßen Wasserradanordnung 10 kann bspw. aus einem im wesentlichen umgekehrt U-förmig gebogenen Träger aus geeignet stabilem und beständigem Material, wie bspw. nichtrostendem Stahl, bestehen. Der Träger umfasst zwei im wesentlichen vertikal verlaufende Schenkel 22 mit Durchbohrungen 24 zur Aufnahme der Mittelwelle 13 des Wasserrads 12 zwischen den beiden Schenkeln 22 sowie einen im wesentlichen vertikalen oberen Querabschnitt 26.

Wie aus den Darstellungen der Figuren 1 und 2 hervorgeht, sind alle benötigten Elemente der erfindungsgemäßen Wasserradanordnung 10 zwischen bzw. an dem Rahmen 20 angebracht. Das Wasserrad 12 mit dem Stauschild 18 sind zwischen den beiden Schenkeln 22 drehbar gelagert. An der dem oberen Querabschnitt 26 gegenüberliegenden Unterseite ist ein freier Bereich vorgesehen, der die Durchflussöffnung bildet und von der ebenfalls zwischen den beiden Schenkeln 22 angelenkten Klappe 18 abgedeckt wird. Zu Zwecken der Erhöhung der Stabilität kann zwischen Wasserrad 12und Klappe 18 noch ein (nicht dargestelltes) Querelement vorgesehen sein.

Wie bereits voranstehend beschrieben, sind die Elemente der Vorrichtung 60 zur Übertragung der Wasserraddrehung an dem Rahmen angebracht, in dem dargestellten Ausführungsbeispiel außen an einem der beiden Schenkel 22 sowie an dem Querabschnitt 26.

Die erfindungsgemäße Ausgestaltung ermöglicht eine weitgehende Vormontage der Wasserradanordnung, die dann vor Ort als Ganzes in den Wasserkanal eingesetzt werden kann, wodurch die Nachrüstung bestehender Wasserkanäle erheblich erleichtert wird.

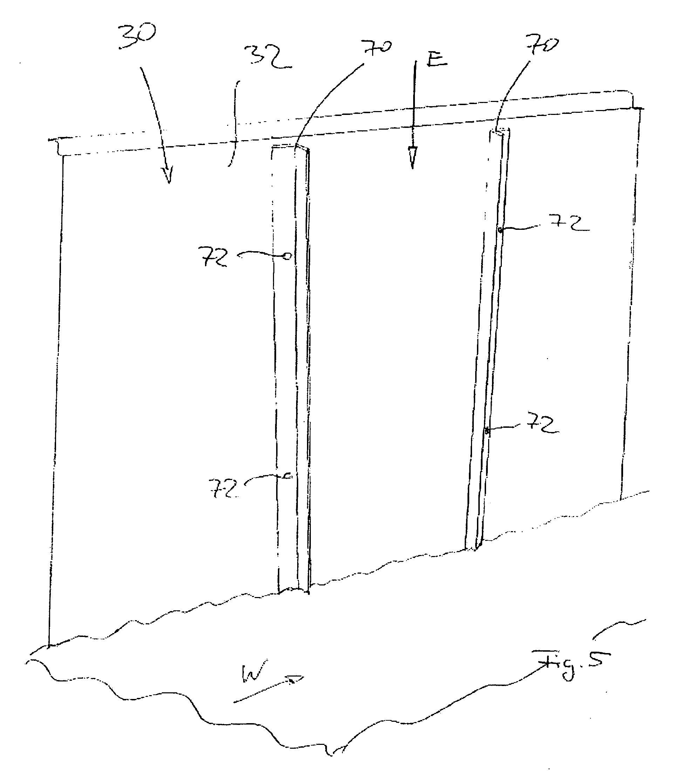

Der Einbau einer erfindungsgemäßen Wasserradanordnung erfolgt wie nachstehend unter Bezugnahme auch auf die Figur 5 beschrieben.

In den Wasserkanal 30, der mit der Wasserradanordnung bestückt werden soll, werden an dessen Kanalwänden 32 im wesentlichen vertikal verlaufende Schienen 70 angebracht, bspw. mittels geeigneter Schrauben 72. Bei den Schienen handelt es sich bspw. um Metallschienen mit L-förmigem Querschnitt, aber auch andere Arten und Ausgestaltungen von Schienen sind möglich. Der Begriff der "Schiene" im Kontext dieser Anmeldung bezeichnet ein Element, das in der Lage ist, den Rahmen der Wasserradanordnung führend aufzunehmen und ihm im eingesetzten Zustand einen ausreichenden Halt zu vermitteln.

Wie dargestellt, kann es sich um zwei beabstandet zueinander an jeder Kanalwand angeordnete Schienen auf beiden Seiten des Kanals handeln. Es ist aber auch möglich, auf jeder Seite des Kanals lediglich eine Schiene anzubringen, wenn diese von Form und Festigkeit geeignet ist, die geforderte Führungs- und Haltefunktion zu erfüllen.

Zum Einbau der Wasserradanordnung wird diese mit ihrem Rahmen 20 von oben zwischen die Schienen 70 eingesetzt und im Sinne des eingezeichneten Pfeils E nach unten abgesenkt, geführt von den Schienen 70. Der Abstand zwischen den Schienen 70 ist so gewählt, dass die vertikalen Schenkel 22 des Rahmens 20 genau zwischen diese passen. Um das Einsetzen zu erleichtern, können die oberen Enden der Schienen 70 leicht schräg nach außen verlaufen (nicht dargestellt).

Um die Festigkeit der Anordnung zu erhöhen, kann der Rahmen 20 noch an dem Kanalboden 34 verankert werden.

Einlaufseitig des Wasserrads 12 können anschließend zu beiden Seiten des Kanals 30 zur Bildung eine Zulaufkanalabschnitts Wandelemente 36 eingesetzt werden, deren Dicke im wesentlichen der Dicke der Schenkel 22 des Rahmens 20 entspricht. Dadurch wird sichergestellt, dass die gesamte Wassermenge dem Wasserrad 12 zugeführt wird und "Leckverluste" in Form von Wasserumströmungen seitlich des Wasserrads zu minimieren.

Erfindungsgemäß wird somit eine Wasserradanordnung bereitgestellt, die es ermöglicht, variable Wassermengen in einem Kanal mit geringem Gefälle und maximal begrenztem Stauziel einerseits soweit aufzustauen, dass eine Optimierung des Nutzungsgrads der Stromerzeugung aus Wasserkraft erreicht wird, und andererseits jedoch die Wassermenge so zu regulieren, dass das maximal begrenzte Stauziel nie überschritten wird.

Die kreissegmentförmige und an den Umfang des Wasserrads angepasste Form des Radialstauschilds verringert die Leckverluste, die herkömmlicherweise zwischen Stauschild und Wasserrad entstehen.

Die erfindungsgemäße Wasserradanordnung lässt sich insbesondere in offenen Kanalsystemen für Kreislauf- bzw. Rezirkulationswasser einer Kläranlage oder auch in Brauchwasserkanälen von Industrieanlagen einsetzen. Ganz allgemein ist die Wasserradanordnung der Erfindung zur Wasserkraftnutzung in (bestehenden) offenen Wasserkanälen geeignet.

## Patentansprüche

1. Wasserradanordnung (10) zur Anbringung in einem Wasser führenden Wasserkanal, mit einem eine Vielzahl von Schaufeln (14) aufweisenden und sich um eine Drehachse (D) drehenden Wasserrad (12) und einem dem Wasserrad (12) stromaufwärts um dessen Drehachse (D) drehbar gelagert zugeordneten Radialstauschild (16), wobei das Radialstauschild (16) derart ausgebildet ist, dass es sich wasserstandsabhängig vor das Wasserrad (12) dreht, **dadurch gekennzeichnet, dass** sich das Radialstauschild (16) entgegengesetzt zu der Richtung der Wasserstandsänderung dreht.

2. Wasserradanordnung (10) nach Anspruch 1, bei dem die Drehung des Radialstauschilds (16) mechanisch oder elektrisch erfolgt.

3. Wasserradanordnung (10) nach Anspruch 1 oder 2, bei dem unterhalb des Wasserrads (12) eine eine Durchflussöffnung freigebende bewegliche Klappe (18) vorgesehen ist.

4. Wasserradanordnung (10) nach einem der Ansprüche 1 bis 3, bei der das Wasserrad (12) in einem Rahmen (20) drehbar gelagert angeordnet ist.

5. Wasserradanordnung (10) nach Anspruch 4, die eine an dem Rahmen (20) angebrachte Vorrichtung (60) zur Übertragung der Wasserraddrehung umfasst.

6. Wasserkanal mit einer Wasserradanordnung (10) nach einem der Ansprüche 1 bis 5.

7. Verfahren zum Nachrüsten eines Wasserkanals (30) mit einem Wasserrad (12) zur Energiegewinnung, mit den Schritten des Anbringens von im wesentlichen vertikal verlaufenden Schienen (70) an gegenüberliegenden Wänden (32) des Wasserkanals (30) und des Einsetzens einer Wasserradanordnung (10) nach Anspruch 4 oder 5, wobei die im wesentlichen vertikal verlaufenden Schienen (70) zur vertikalen Aufnahme des Rahmens (20) geeignet angeordnet sind.

8. Verfahren nach Anspruch 7, bei dem die Schienen (70) als Führungselemente für den Rahmen (20) beim Einsetzen und Absenken der Wasserradanordnung (10) in den Wasserkanal (30) dienen.

9. Verfahren nach Anspruch 7 oder 8, bei dem nach eingesetzter Wasserradanordnung (10) auf einer Einlaufseite des Wasserrads (12) Wandelemente (36) zwischen Wasserrad (12) und Kanalwänden (32) eingesetzt werden.

## Claims

1. A water wheel assembly (10) for mounting in a water bearing water channel, the water wheel assembly comprising a water wheel (12) having a plurality of paddles (14) and rotating around a rotational axis (D), and a radial gate shield (16) associated with the water wheel (12) upstream rotatably supported around the rotational axis (D) thereof, wherein the radial gate shield (16) is formed such that it rotates in front of the water wheel (12) depending on the water level, **characterized in that** the radial gate shield (16) rotates opposite to the direction of the water level variation.

2. The water wheel assembly (10) according to claim 1, wherein the rotation of the radial gate shield (16) is mechanically or electrically effected.

3. The water wheel assembly (10) according to claim 1 or 2, wherein a movable flap (18) releasing a passage opening is provided below the water wheel (12).

4. The water wheel assembly (10) according to any one of claims 1 to 3, wherein the water wheel (12) is disposed rotatably supported in a frame (20).

5. The water wheel assembly (10) according to claim 4, which includes a device (60) attached to the frame (20) for transferring the water wheel rotation.

6. A water channel comprising a water wheel assembly (10) according to any one of claims 1 to 5.

7. A method for retrofitting a water channel (30) with a water wheel (12) for energy generation, including the steps of mounting substantially vertically extending rails (70) on opposing walls (32) of the water channel (30) and inserting a water wheel assembly (10) according to claim 4 or 5, wherein the substantially vertically extending rails (70) are disposed suitable for vertically receiving the frame (20).

8. The method according to claim 7, wherein the rails (70) serve as guiding elements for the frame (20) in inserting and lowering the water wheel assembly (10) into the water channel (30).

9. The method according to claim 7 or 8, wherein after inserting the water wheel assembly (10), wall elements (36) are inserted between water wheel (12) and channel walls (32) on an inlet side of the water wheel (12).

## Revendications

1. Agencement de roue hydraulique (10) à installer dans un canal à eau qui mène de l'eau, comprenant une roue hydraulique (12) comportant une pluralité d'aubes (14) et en rotation autour d'un axe de rotation (D), et un panneau de rétention radial (16) agencé en amont de la roue hydraulique (12) et monté en rotation autour de son axe de rotation (D), le panneau de rétention radial (16) étant réalisé de telle façon qu'il tourne devant la roue hydraulique (12) en fonction du niveau d'eau, **caractérisé en ce que** le panneau de rétention radial (16) tourne en sens opposé à la direction de la modification du niveau d'eau.

2. Agencement de roue hydraulique (10) selon la revendication 1, dans lequel la rotation du panneau de rétention radial (16) a lieu par voie mécanique ou électrique.

3. Agencement de roue hydraulique (10) selon la revendication 1 ou 2, dans lequel un clapet mobile (18) qui libère une ouverture d'écoulement est prévu au-dessous de la roue hydraulique (12).

4. Agencement de roue hydraulique (10) selon l'une des revendications 1 à 3, dans lequel la roue hydraulique (12) est agencée et montée en rotation dans un cadre (20).

5. Agencement de roue hydraulique (10) selon la revendication 4, qui inclut un dispositif (60), rapporté sur le cadre (20), pour transmettre la rotation de la roue hydraulique.

6. Canal à eau comprenant un agencement de roue hydraulique (10) selon l'une des revendications 1 à 5.

7. Procédé pour équiper a posteriori un canal à eau (30) avec une roue hydraulique (12) pour la récupération d'énergie, comprenant les étapes consistant à monter des rails (70) s'étendant sensiblement verticalement sur des parois opposées (32) du canal à eau (30) et à mettre en place un agencement de roue hydraulique (10) selon la revendication 4 ou 5, dans lequel les rails (70) s'étendant sensiblement verticalement sont agencés de manière appropriée pour recevoir verticalement le cadre (20).

8. Procédé selon la revendication 7, dans lequel les rails (70) servent d'éléments de guidage pour le cadre (20) lors de la mise en place et de l'abaissement de l'agencement de roue hydraulique (10) dans le canal à eau (30).

9. Procédé selon la revendication 7 ou 8, dans lequel, après avoir mis en place l'agencement de roue hydraulique (10), des éléments de paroi (36) sont mis en place sur un côté à l'entrée de la roue hydraulique (12) entre la roue hydraulique (12) et les parois (32) du canal.
